# EUROPEAN PATENT APPLICATION

(11) **EP 1 916 548 A1**
(43) Date of publication of application: **30.04.2008**
(21) Application number: 07253535.4
(22) Date of filing: 07.09.2007
(51) Int. Cl.: G02B 5/20

(54) **Film, filter and flat display panel device thereof**

(30) Priority: 24.10.2006 KR 20060103510
(71) Applicant: LG Electronics, Inc., Seoul 150-721 (KR)
(72) Inventor: Park, Tae Soon, Seoul 137-724 (KR)
(74) Representative: Camp, Ronald

(57) **Abstract**

External light can be shielded without the moire phenomenon by providing a external light shielding layer to a filter connected to a panel or a front of the panel and by irregularly forming pattern units instead of forming them regularly, and the picture quality can be enhanced because a reflective layer is formed using beads and thus the image light source emitted from the panel is displayed to the outside without being absorbed therefrom.

## Description

### BACKGROUND OF THE INVENTION

### 1. Field of the Invention

The present invention relates to an external light shielding film, a filter and a flat display panel device. It more particularly relates to an external light shielding film that is composed of an external light shielding layer capable of preventing Moire phenomenon by irregularly forming pattern units and preventing an image light source from being absorbed in the pattern unit by forming a reflective layer on the outer surface of the pattern unit, a filter and a flat display panel device thereof.

### 2. Description of the Conventional Art

As a kind of a flat display panel, there are a LCD, a PDP, an OLED, a FED and a SED, and the flat display panel means a device on which images are displayed through a flat panel, and driving technologies for displaying images may be applied in different ways.

This flat display panel has a disadvantage in that contrast is degraded because black images are recognized as being brighter than they actually are, since external ambient light is reflected on the front surface of the panel due to white phosphors exposed at a panel upper substrate or a lower substrate when the flat display panel realizes black images.

Further, in case that a regular pattern is formed on the layer constituting a functional film or a filter that is stacked on the panel, the Moire phenomenon causing optical interference with regular structures such as a barrier rib, an electrode and a black matrix is produced, and thus the noise in the shape of a wave reduces picture quality.

### SUMMARY OF THE INVENTION

A flat display device according to the present invention includes a display panel; and an external light shielding layer, wherein the external light shielding layer is composed of a base unit; and a plurality of pattern units that are irregularly arranged as spaced apart at different distances.

A filter according to the present invention includes an external light shielding layer composed of a base unit; and a plurality of pattern units irregularly arranged as spaced apart at different distances.

Another filter according to the present invention includes an external light shielding layer composed of a base unit; and a pattern unit that some portion of the pattern unit is protruded from the base unit.

A film according to the present invent ion includes a base unit; and a plurality of pattern units irregularly arranged as spaced apart at different distances, wherein at least one of the plurality of pattern units comprises beads.

### BRIEF DESCRIPTION OF THE DRAWING

FIG. 1 is a perspective view illustrating a plasma display panel according to an embodiment of the present invention.
FIG. 2 is a structural view of an external light shielding layer of the present invention,
FIG. 3 is a front view of the external light shielding layer of the present invention,
FIG. 4 is a cross sectional view illustrating a structure that the external light shielding layer of the present invention is stacked on the panel,
FIG. 5 is a cross sectional view illustrating a structure of a filter having the external light shielding layer of the present invention.

### DETAILED DESCRIPTION OF THE PREFERRED EMBODIMENT

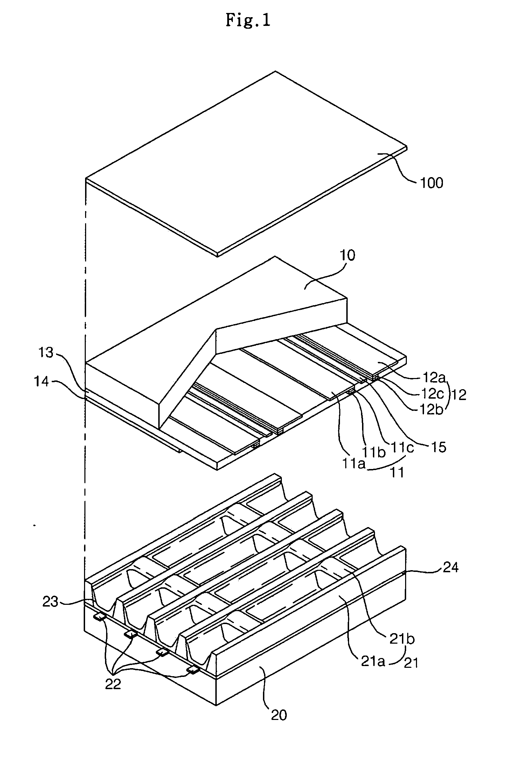

Hereinafter, embodiments of the present invention will be described in detail with reference to FIGS 1 to 5, in which exemplary embodiments of the invention are shown.

FIG. 1 is a perspective view illustrating a plasma display panel structure as a preferred embodiment of a flat display panel.

The plasma display panel includes a scan electrode 11 and a sustain electrode 12, which are a sustain electrode pair formed on an upper substrate 10, and an address electrode 22 formed on a lower substrate 20.

The sustain electrode pair 11 and 12 includes transparent electrodes 11a and 12a and bus electrodes 11b and 12b that are generally made of indium-tin-oxide (IT0). The bus electrodes 11b and 12b can be made of a metal such as silver (Ag) and chromium (Cr) or can be made with a stacked structure of chromium/copper/chromium (Cr/Cu/Cr) or chromium/aluminum/chromium (Cr/Al/Cr). The bus electrodes 11b and 12b are formed on the transparent electrodes 11a and 12a to reduce voltage drop due to the transparent electrodes 11a and 12a having high resistance.

Meanwhile, according to an embodiment of the present invention, the sustain electrode pair 11 and 12 can be composed of a stacked structure of the transparent electrodes 11 a 12a and the bus electrodes 11b and 12b or only the bus electrodes 11b and 12b without the transparent electrodes 11a and 12a. Because the latter structure does not use the transparent electrodes 11a and 12a, there is an advantage in that a cost of manufacturing a panel can be decreased. The bus electrodes 11b and 12b used in the structure can be made of various materials such as a photosensitive material in addition to the above-described materials.

A black matrix (BM) 15, which performs a light shielding function of reducing reflection by absorbing external light that is generated from the outside of the upper substrate 10 and a function of improving purity and contrast of the upper substrate 10 is arranged between the transparent electrodes 11a and 12a and the bus electrodes 11b and 12b of the scan electrode 11 and the sustain electrode 12.

The black matrix 15 according to an embodiment of the present invention is formed in the upper substrate 10 and includes a first black matrix 15 that is formed in a position that is overlapped with a barrier rib 21 and second black matrixes 11c and 12c that are formed between the transparent electrodes 11a and 12a and the bus electrodes 11b and 12b. Here, the first black matrix and the second black matrixes 11c and 12c that are also referred to as a black layer or a black electrode layer may be physically connected to each other when they are formed at the same time in a forming process or need not be physically connected to each other when they are not formed at the same time.

In addition, when they are physically connected to each other, the first black matrix 15 and the second black matrixes 11c and 12c are made of the same material, but when they are physically separated from each other, they may be made of other materials.

An upper dielectric layer 13 and a protective film 14 are stacked in the upper substrate 10 in which the scan electrode 11 and the sustain electrode 12 are formed in parallel. Charged particles, which are generated by a discharge are accumulated in the upper dielectric layer 13 and perform a function of protecting the sustain electrode pair 11 and 12. The protective film 14 protects the upper dielectric layer 13 from sputtering of charged particles that are generated at a gas discharge and enhances emission efficiency of a secondary electron.

In addition, the address electrode 22 is formed in an intersecting direction of the scan electrode 11 and the sustain electrode 12. Furthermore, a lower dielectric layer 24 and a barrier rib 21 are formed on the lower substrate 20 in which the address electrode 22 is formed.

In addition, a phosphor layer 23 is formed on the surface of the lower dielectric layer 24 and the barrier rib 21. In the barrier rib 21, a vertical barrier rib 21a and a horizontal barrier rib 21b are formed in a closed manner and the barrier rib 21 physically divides a discharge cell and prevents ultraviolet rays and visible light that are generated by a discharge from leaking to adjacent discharge cells.

In an embodiment of the present invention, various shapes of barrier rib 21 structure as well as the barrier rib 21 structure shown in FIG. 1 can be used. For example, a differential barrier rib structure in which the vertical barrier rib 21a and the horizontal barrier rib 21b have different heights, a channel type barrier rib structure in which a channel, which can be used as an exhaust passage is formed in at least one of the vertical barrier rib 21a and the horizontal barrier rib 21b, and a hollow type barrier rib structure in which a hollow is formed in at least one of the vertical barrier rib 21a and the horizontal barrier rib 21b, can be used.

In the differential type barrier rib structure, it is more preferable that the height of the horizontal barrier rib 21b is higher than that of the vertical barrier rib 21a and in the channel type barrier rib structure or the hollow type barrier rib structure, it is preferable that a channel or a hollow is formed in the horizontal barrier rib 21b.

Meanwhile, in an embodiment of the present invention, it is described as each of R, G, and B discharge cells is arranged on the same line, but they may be arranged in other shapes. For example, a delta type of arrangement in which the R, G, and B discharge cells are arranged in a triangle shape may be also used. Furthermore, the discharge cell may have various polygonal shapes such as a quadrilateral shape, a pentagonal shape, and a hexagonal shape.

Furthermore, the phosphor layer 23 emits light by ultraviolet rays that are generated at a gas discharge and generates any one visible light of red color R, green color G, or blue color B light. Here, an inert gas mixture such as He+Xe, Ne+Xe, and He+Ne+Xe for performing a discharge is injected into a discharge space that is provided between the upper/lower substrates 10, 20 and the barrier rib 21.

A functional film such as the external light shielding film or a filter 100 is connected to the front of the panel constructed as above to improve the picture quality, and the filter may be formed as a glass type or a film type that is stuck, adhered or attached to the front of the panel, however the present invention is not restricted thereto.

This filter 100 is configured as at least one layer is stacked, and thus the external light shielding layer may be connected to the panel as it is included in the filter, and the external light shielding layer 200 may be inserted between the filter and the panel as it is formed as a separate layer.

Also, the external light shielding layer may be attached to the front of the panel, or may be arranged at a specific interval from the panel.

The external light shielding layer of the present invention enhances bright room contrast of the display image by absorbing external ambient light to prevent the light from the outside from being reflected to a viewer and by displaying image light, as the image light is not absorbed in a pattern unit material but reflected on the pattern unit material and retro-reflected on the upper substrate.

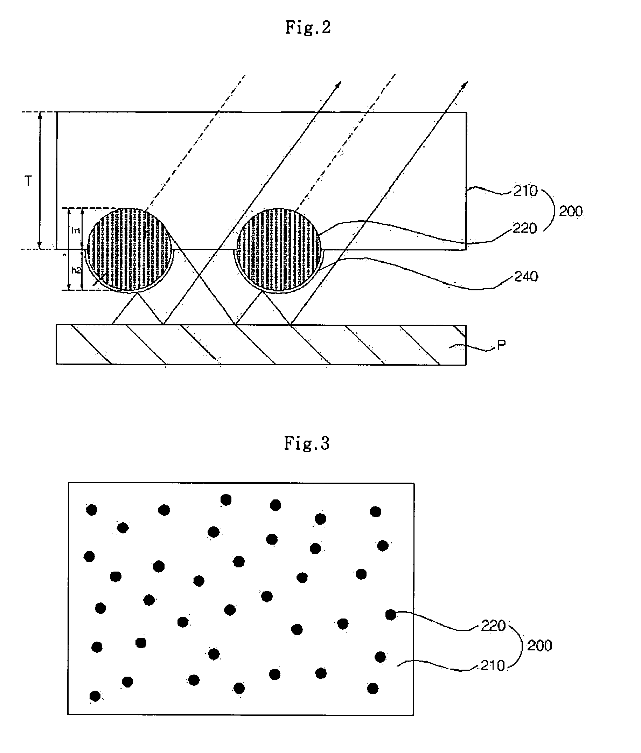

Referring to FIGS 2 and 3, the external light shielding layer of the present invention is composed of a transparent base unit 210, and a pattern unit 220 in which material of low refractive index or of the same refractive index as the base unit is irregularly arranged by being spaced apart from each other by a different distance.

In order to maximize the absorption of external light and the reflection of light emitted from the panel P, the refractive index of the pattern unit 220 may be determined to be 0.3 - 1 times higher than the refractive index of the base unit 210. In particular, in order to maximize the reflection of panel P light by the slanted surfaces of the pattern unit 220, the refractive index of the pattern unit 220 may be determined to be 0.3 - 0.8 times higher than the refractive index of the base unit 210.

When the refractive index of the pattern unit 220 is lower than the refractive index of the base unit 210, light emitted from the panel P is reflected by the surfaces of the pattern unit 220 and thus spreads out toward the user, thereby resulting in unclear, blurry images, i.e., a ghost phenomenon.

When the refractive index of the pattern unit 220 is higher than the refractive index of the base unit 210, external light incident upon the pattern unit 220 and light emitted from the panel P are both absorbed by the pattern unit 220. Therefore, it is possible to reduce the probability of occurrence of the ghost phenomenon.

In order to absorb as much panel light as possible and thus to prevent the ghost phenomenon, the refractive index of the pattern unit 220 may be 0.05 or more higher than the refractive index of the base unit 210.

When the refractive index of the pattern unit 220 is higher than the refractive index of the base unit 210, the transmissivity and contrast of an external light shield sheet may decrease. In order not to considerably reduce the transmissivity and contrast of an external light shield sheet while preventing the ghost phenomenon, the refractive index of the pattern unit 220 may be 0.05 - 0.3 higher than the refractive index of the base unit 210. Also, in order to uniformly maintain the contrast of the panel P while preventing the ghost phenomenon, the refractive index of the pattern unit 220 may be 1.0 - 1.3 times greater than the refractive index of the base unit 210.

The base unit 210 may be formed of a transparent plastic material, for example a UV-hardened resin-based material, so that light can smoothly transmit therethrough. Alternately, the base unit 210 is possible to use a hard glass material to protect the front of the panel P.

That is, the base unit 210 is composed of at least one of a transparent resin layer or a transparent adhesion layer, and it is possible to absorb external impact by adjusting elasticity and Young's modulus of the transparent adhesion layer.

The transparent resin layer is composed of at least one of polyester resin, polypropylene resin, ethylene-acetic acid vinyl copolymer, polyethylene and polyurethane, and the transparent adhesion layer is composed of acryl resin or silicon resin.

The pattern unit 220 may be configured that some portion of the pattern unit 220 is inserted into the base unit by irregularly forming a recess in the base unit 210 in advance, or by inserting a predetermined material before the material of the base unit is cured, or by irregularly diffusing the predetermined material on the base unit.

After all, the pattern unit 220 is configured that the predetermined material is arranged on the base unit 210 and some portion of it is inserted into the base unit as shown in FIG. 3, and thus the manufacturing process may be implemented by those skilled in the art in various ways.

The predetermined material is a grain of glass, transparent polymer resin and silicon dioxide, and the present invention is embodied as beads 220.

Each of the beads 220 is formed of a material darker than the base unit 210. Preferably, the beads 220 are formed of a black carbon-based material, and the refractive index of the beads is equal or lower than the refractive index of the base unit 210. Therefore, the pattern unit 220 on which a plurality of beads are arranged absorbs and reflects external light.

In this embodiment, the beads 220 are circular and have the same size as each other as described in FIG. 2, however they may be formed as triangles, rectangles, trapezoids, inverted triangles, inverted trapezoids in case of using other materials and also materials of amorphous may be applied. Further, at least one of the beads may have different size from the other beads.

The beads 220 are formed to have a size that can be easily manufactured and arranged on the base unit 210 irregularly, and the content of the beads are decided to maximize absorption of external ambient light.

Also, the beads 220 are smaller than the pixels, so as not to produce optical interference with structures such as a barrier rib, an electrode and a black matrix that are formed on the upper/lower substrate constituting the panel (P). The diameter h of the beads is 10 - 600 µm with respect to the fact that the sizes of the pixels are different to each other in accordance with the panel manufacturer, the product model and resolution.

As shown in FIG. 3 as a cross sectional view, the beads can be irregularly arranged so that the area of the beads is 10% to 78.5% of that of the base unit 210. This is to absorb external ambient light that is reflected into the pattern unit efficiently, since light transmittance ratio and opening ratio of the external light shielding layer are reduced when the area of the beads is above 78.5%.

Also, in order to maximize the absorption of external light and the total reflection of light emitted from the panel in consideration of the incident angle of external light to the panel P, the refractive index of the pattern unit may 0.3 - 1.00 times higher than the refractive index of the base unit 210. Also, the total reflection of light emitted from the panel is maximized when the refractive index of the pattern unit is set to be 0.3 - 0.8 times higher than the refractive index of the base unit.

That is, external ambient light that is diagonally incident upon the pattern unit is reflected into and absorbed by the pattern unit which has an equal or low reflective index than the base unit, and light emitted from the display panel to outside is totally reflected from the boundary surface of the pattern unit to the outside, i.e., toward the viewer side.

Therefore, the external light shielding layer 200 prevents the moire phenomenon because the beads 220 are irregularly arranged thereon, and the bright room contrast of the display images is enhanced by absorbing external light and by reflecting light emitted from the panel to the outside as the light is retro-reflected at the upper substrate of the panel since the image light, which is absorbed by the external light shielding layer, is reflected through a metal layer.

When the thickness T of the external light shielding layer is 20 - 600 µm, the manufacture of the external light shielding layer can be facilitated and the light transmittance ratio of the external light shielding layer can be optimized. More preferably, the thickness T of the external light shielding layer may be 100 - 800 µm in order to smoothly transmit the light emitted from the panel and to effectively absorb and shield external light by being refracted and to obtain the rigidity of the sheet.

Also, some portion of the beads 220 protrudes from the base unit 210, and the protruded part of the beads is 10 to 90% of the total area of the beads. The amount of image light is not sufficient when the protruded part of the beads is 10% because it is deeply inserted therein, and the beads are unstably fixed in the base unit when the protruded part of the beads is 90% and thus there is a risk of becoming detached therefrom.

Further, a plurality of beads 220 are arranged on the base unit 210, and thus the protruded part of at least one of the beads may different from the others.

Therefore, the depth h1 of the beads according to the present invention is 1 to 540 µm in order to effectively shield external light and to prevent the beads from becoming detached therefrom.

Here, the insertion depth h1 of the beads can be varied according to the thickness T of the external light shielding layer, and thus it has values within certain ranges. That is, as the insertion depth h1 increases, the amount of the image light reflected by a reflective layer of the external light shielding layer decreases, and thus, the transmittance ratio of the image light may be degraded, and as the insertion depth h1 decreases, external light incident upon the panel at an angle within predetermined ranges may not be shielded and the beads may become detached therefrom.

Furthermore, an image light source of the panel is not absorbed by the beads and reflected by the reflective layer and the image light source is displayed as being retro-reflected on the upper substrate of the panel, as the reflective layer 240 is formed on the external surface where the beads 220 protrude therefrom, i.e., on the lower surface of the beads.

Here, the reflective layer 240 is a metal or a metal oxide which is electrically conductive and, for example the reflective layer is formed of a metal of 10 to 99% including Al.

The thickness t is preferably 10 nm to 50 µm because when the thickness of the metal is 10 nm or below, the thickness is too thin and thus light source emitted from the panel is not reflected but transmitted therethrough. Also, when the thickness is 50 µm or more, the manufacturing cost is increased due to the thick thickness of the external light shielding layer 200.

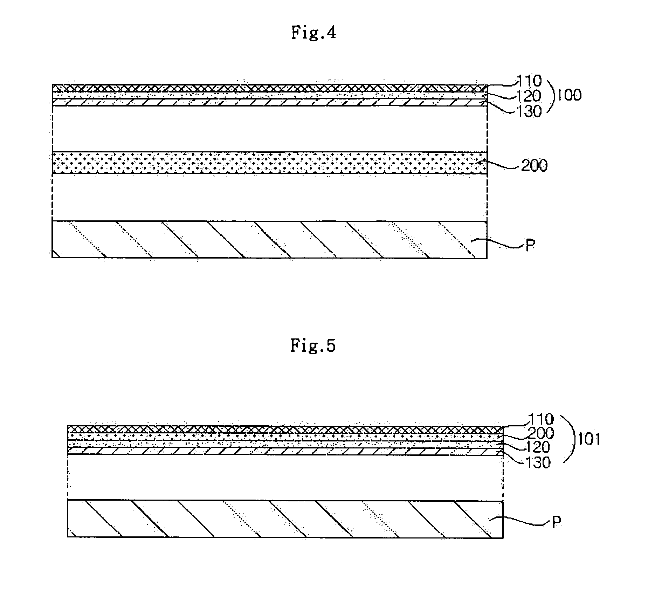

FIGS. 4 and 5 are cross sectional views illustrating the panel and filter having the external light shielding layer 200 of the present invention. Referring to FIG. 4, the external light shielding layer 200 is disposed between the filter 100 and the panel P and displays the image light source by reflecting the image light source emitted from the panel and the image light source is retro-reflected from the upper substrate of the panel to the outside. Referring to FIG. 5, the external light shielding layer is stacked with the other layer constituting the filter 101.

Here, the filters 100, 101 include at least one of an AR layer, NIR shielding layer, an EMI shielding layer and a transparent base material for supporting.

Besides, at least one layer which is stacked on the panel P or included in the filter 100, 101 may further include an anti-glare layer, a Matt coating layer, an antistatic layer preventing the static electricity or contamination from the outside, and a glare proof coat ing layer, and may further include a color correct ion layer enhancing the color purity to be displayed, a NE light shielding coating layer, and a diffusion layer widening vertical and horizontal viewing angles of a display screen by uniformly diffusing light emitted from the panel, however the present invention is not restricted by the drawings.

The AR layer 110 serves to reduce the glare phenomenon by preventing the reflection of external ambient light. The AR layer 110 is arranged on the outermost surface of a plurality of layers which are connected to the panel or of the filter composed of the plurality of the layers.

Also, the NIR shielding layer 120 shields NIR rays emitted from the panel so that signals provided by a device such as a remote control which transmits signals using infrared rays can be normally transmitted. The EMI shielding layer 130 shields EMI emitted from the panel.

Here, the EMI shielding layer 130 is generally formed of a conductive material in a mesh form. An invalid display area where no image is displayed is covered with a conductive material in order to properly ground the EMI shielding layer 130.

The NIR shielding layer 120 and the EMI shielding layer 130 are preferably adjacent to the panel, and thus, they may be disposed between the external light reflective layer and the panel when the external light reflective layer 200 is included in the filter 101.

However, the order in which the AR layer 110, the EMI shielding layer 120, the external light shielding layer 130 and the transparent base material are stacked is not restricted to those set forth herein. Also, at least one of the AR layer 110, the EMI shielding layer 120, the external light shielding layer 130 and the transparent base material can be omitted, and the present invention is not restricted by the drawings.

The external light shielding layer, the filter having the external light shielding layer, and the plasma display device of the present invention can effectively realize black images and prevent the moire phenomenon and enhance picture quality, as the image light source emitted from the panel is reflected and the image light source is retro-reflected from the upper substrate of the panel to the outside.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A flat display device, comprising:
a display panel; and
an external light shielding layer formed on the display panel, wherein the external light shielding layer includes a base unit and a plurality of pattern units that are irregularly arranged and are spaced apart at different distances.

2. The flat display device of Claim 1, wherein at least one of the plurality of pattern units comprises beads.

3. The flat display device of Claim 1, wherein at least one of the plurality of pattern units is smaller than a pixel of the display panel.

4. The flat display device of Claim 1, wherein the diameter of pattern unit is 10 - 600 µm.

5. The flat display device of Claim 1, wherein the area of the plurality of pattern units are arranged on 10% to 78.5% of the area of the base unit.

6. The flat display device of Claim 1, wherein the refractive index of the pattern unit is 0.3 - 1.00 times higher than the refractive index of the base unit.

7. The flat display device of Claim 1, wherein the refractive index of the pattern unit is higher than the refractive index of the base unit.

8. The flat display device of Claim 1, wherein the refractive index of the pattern unit is 1.0 - 1.3 times higher than the refractive index of the base unit.

9. The flat display device of Claim 1, wherein at least one of the plurality of pattern units has a part protruded from the base unit and the protruded part is 10 to 90% of the pattern unit.

10. The flat display device of Claim 1, wherein a reflective layer is formed on the external surface of at least one of the plurality of pattern units.

11. The flat display device of Claim 10, wherein the reflective layer includes a metal oxide.

12. A filter, comprising:
an external light shielding layer including a base unit and a plurality of pattern units that are irregularly arranged on the base unit spaced apart from each other at different distances.

13. The filter of Claim 12, wherein at least one of the plurality of pattern units comprises beads.

14. The filter of Claim 12, wherein the refractive index of the pattern unit is 1.0 - 1.3 times higher than the refractive index of the base unit.

15. A filter, comprising:
an external light shielding layer including a base unit and a pattern unit of which a part of the pattern unit is protruded from the base unit.

16. The filter of Claim 15, wherein the protruded part corresponding to 10% to 90% of the total pattern unit is protruded from the base unit.

17. The filter of Claim 15, wherein a reflective layer is formed on the external surface of the pattern unit protruded from the base unit.

18. The filter of Claim 17, wherein the reflectivity of the reflective layer is 10 to 99%.

19. The filter of Claim 15, wherein the refractive index of the pattern unit is higher than the refractive index of the base unit.

20. The filter of Claim 15, wherein the refractive index of the pattern unit is 1.0 - 1.3 times higher than the refractive index of the base unit.
